# EUROPEAN PATENT APPLICATION

(11) **EP 4 843 471 A1**
(43) Date of publication of application: **25.11.2026**
(21) Application number: 25741472.2
(22) Date of filing: 14.01.2025
(51) Int. Cl.: A47L 11/40

(54) **CONTROL METHOD AND APPARATUS FOR CLEANING ROBOT, DEVICE, AND MEDIUM**

(30) Priority: 16.01.2024 CN 202410063920
(71) Applicant: Beijing Roborock Innovation Technology Co., Ltd., Beijing 102206 (CN)
(72) Inventor: ZHOU, Changlin, Beijing 102206 (CN); WU, Erqi, Beijing 102206 (CN)
(74) Representative: Maiwald GmbH
(86) International application number: PCT/CN2025/072169
(87) International publication number: WO 2025/152911

(57) **Abstract**

A control method and apparatus for a cleaning robot, a device, and a medium, relating to the technical field of robots. The method comprise: providing a graphical interface at a configuration end, wherein the interface comprises an instruction block panel and an instruction editor, and the instruction block panel comprises at least one instruction block (S101); in the instruction editor, receiving one or more target instruction blocks selected from the instruction block panel, and by means of the one or more target instruction blocks, formulating target control logic for controlling a cleaning robot (S102); and controlling the cleaning robot on the basis of the formulated target control logic (S103). By providing the graphical interface at the configuration end, users can formulate target control logic according to their diverse and personalized requirements, so as to meet corresponding target function requirements, such that the usage scenarios of the cleaning robot are enriched, improving the working efficiency of the cleaning robot.

## Description

The present disclosure claims priority to Chinese Patent Application No. 202410063920.1, filed with the China National Intellectual Property Administration on January 16, 2024 and entitled "CONTROL METHOD AND APPARATUS FOR CLEANING ROBOT, DEVICE, AND MEDIUM", the content of which is incorporated herein by reference in its entirety.

### TECHNICAL FIELD

The present disclosure relates to the technical field of robots, and in particular, to a control method and apparatus for a cleaning robot, a device, and a medium.

### BACKGROUND ART

With the development of computer technology and embedded technology, various cleaning robots such as sweeping robots and mopping robots have emerged. Currently, a user may interact with a cleaning robot on an app (application program) through virtual buttons, voice, or the like, and the cleaning robot may travel by itself in a specified region according to an interactive instruction and perform cleaning, removal, or other operations.

However, currently, only fixed instructions can be sent to the cleaning robot. The fixed instructions cannot meet the user's requirements for diversified and personalized configurations. Therefore, this technical problem needs to be solved urgently.

### SUMMARY OF THE INVENTION

In view of the above problem, the present disclosure is proposed to provide a control method and apparatus for a cleaning robot, a device, and a medium that overcome or at least partially solve the above problem. The technical solutions are as follows:

In a first aspect, a control method for a cleaning robot is provided. The control method is applied to a configuration terminal and includes:
providing a graphical interface, the interface including an instruction block panel and an instruction editor, and the instruction block panel including at least one instruction block;
receiving, in the instruction editor, one or more target instruction blocks selected from the instruction block panel, and formulating, by means of the one or more target instruction blocks, target control logic for controlling the cleaning robot; and
controlling, according to the formulated target control logic, the cleaning robot.

In one possible implementation, the instruction block includes at least one first-level instruction block.

In one possible implementation, the first-level instruction block includes at least one second-level instruction block.

In one possible implementation, receiving, in the instruction editor, the one or more target instruction blocks selected from the instruction block panel includes:
receiving, in the instruction editor, one or more target instruction blocks selected from the first-level instruction block and/or a second-level instruction block of the instruction block panel.

In one possible implementation, the at least one first-level instruction block includes one or more of an artificial intelligence instruction block, a sweeping instruction block, a determining instruction block, an action instruction block, a function instruction block, a loop and branch instruction block, an event instruction block, and other instruction blocks.

In one possible implementation, if the first-level instruction block includes an artificial intelligence instruction block, at least one second-level instruction block under the first-level instruction block includes one or more of voice recognition, object recognition, stain recognition, and speech recognition-based wakeup.

In one possible implementation, if the first-level instruction block includes a sweeping instruction block, at least one second-level instruction block under the first-level instruction block includes one or more of a sweeping position, a sweeping mode, and a suction force.

In one possible implementation, formulating, by means of the one or more target instruction blocks, the target control logic for controlling the cleaning robot includes:
acquiring description information of a function to be implemented to control the cleaning robot; and
based on the description information of the function, formulating, by means of the one or more target instruction blocks, the target control logic for controlling the cleaning robot.

In a second aspect, a control method for a cleaning robot is provided. The control method is applied to a cleaning robot and includes:
receiving target control code sent by a configuration terminal, where the target control code is generated by the configuration terminal according to formulated target control logic; the configuration terminal receives, in an instruction editor, one or more target instruction blocks selected from an instruction block panel, and formulates, by means of the one or more target instruction blocks, target control logic for controlling the cleaning robot; the configuration terminal provides a graphical interface, the interface including the instruction block panel and the instruction editor, and the instruction block panel including at least one instruction block; and
executing the target control code to control the cleaning robot.

In one possible implementation, the cleaning robot includes a code snippet manager and a code executor.

After receiving the target control code sent by the configuration terminal, the method further includes:
storing, by the code snippet manager, the target control code; and
executing the target control code to control the cleaning robot, including:
loading, by the code snippet manager, the target control code to the code executor; and
executing, by the code executor, the target control code to control the cleaning robot.

In one possible implementation, the cleaning robot further includes a function server.

Executing, by the code executor, the target control code to control the cleaning robot includes:
when a function service is involved in a process of executing the target control code, customizing, by the code executor, the function service from the function server, and subscribing, by the function server, to an event corresponding to the function service on an Internet of Things IOT event bus; and
when the event corresponding to the function service is monitored, executing, by the code executor, control code of the event corresponding to the function service to control the cleaning robot.

In one possible implementation, executing, by the code executor, the target control code to control the cleaning robot includes:
starting, by the code executor, a thread to execute the target control code, and in the process of executing the target control code, checking, based on a specified duration, an execution status of the target control code of one or more of the following:
whether the thread exists;
whether event response control code is abnormal;
whether an execution duration of the target control code exceeds a preset threshold;
whether the cleaning robot reports an error; and
whether a stop command sent by the configuration terminal is received; and
stopping executing the target control code in one or more of the following cases: the thread does not exist; the event response control code is abnormal; the execution duration of the target control code exceeds the preset threshold; the cleaning robot reports an error; and the stop command sent by the configuration terminal is received.

In one possible implementation, loading, by the code snippet manager, the target control code to the code executor includes:
loading, by the code snippet manager, the target control code to the code executor that is sandboxed; and
executing, by the code executor, the target control code to control the cleaning robot, including:
executing, by the code executor, the target control code in a sandbox to control the cleaning robot.

In a third aspect, a control apparatus for a cleaning robot is provided. The control apparatus is applied to a configuration terminal and includes:
a display unit, configured to provide a graphical interface, the interface including an instruction block panel and an instruction editor, and the instruction block panel including at least one instruction block;
a formulating unit, configured to receive, in the instruction editor, one or more target instruction blocks selected from the instruction block panel, and formulate, by means of the one or more target instruction blocks, target control logic for controlling the cleaning robot; and
a control unit, configured to control the cleaning robot according to the formulated target control logic.

In a fourth aspect, a control apparatus for a cleaning robot is provided. The control apparatus is applied to a cleaning robot and includes:
a receiving unit, configured to receive target control code sent by a configuration terminal, where the target control code is generated by the configuration terminal according to formulated target control logic; the configuration terminal receives, in an instruction editor, one or more target instruction blocks selected from an instruction block panel, and formulates, by means of the one or more target instruction blocks, target control logic for controlling the cleaning robot; the configuration terminal provides a graphical interface, the interface including the instruction block panel and the instruction editor, and the instruction block panel including at least one instruction block; and
an executing unit, configured to execute the target control code to control the cleaning robot.

In a fifth aspect, a configuration terminal is provided. The configuration terminal includes a processor and a memory. The memory stores a computer program, and the processor is configured to run the computer program to perform the control method for a cleaning robot according to any one of the above aspects.

In a sixth aspect, a storage medium is provided. The storage medium stores a computer program, where the computer program is configured to perform the control method for a cleaning robot according to any one of the above aspects while running.

In a seventh aspect, a cleaning robot is provided. The cleaning robot includes a processor and a memory. The memory stores a computer program, and the processor is configured to run the computer program to perform the control method for a cleaning robot according to any one of the above aspects.

In an eighth aspect, a storage medium is provided. The storage medium stores a computer program, and the computer program is configured to perform the control method for a cleaning robot according to any one of the above aspects while running.

By means of the above technical solutions, in the control method and apparatus for a cleaning robot, the device, and the medium according to embodiments of the present disclosure, a graphical interface can be provided at the configuration terminal. The interface includes an instruction block panel and an instruction editor, and the instruction block panel includes at least one instruction block; one or more target instruction blocks selected from the instruction block panel are received in the instruction editor, and target control logic for controlling the cleaning robot is formulated by means of the one or more target instruction blocks; and the cleaning robot is controlled according to the formulated target control logic. It can be seen that in the embodiments, the graphical interface can be provided at the configuration terminal, and the user can formulate target control logic based on his/her own diversified and personalized requirements to achieve corresponding target function requirements, such that the usage scenarios of the cleaning robot are enriched, and the working efficiency of the cleaning robot is improved.

### BRIEF DESCRIPTION OF THE DRAWINGS

For a clearer illustration of the technical solutions in embodiments of the present disclosure, the drawings that need to be used in the description of the embodiments of the present disclosure are briefly introduced below.
FIG. 1 shows a flowchart of a control method for a cleaning robot applied to a configuration terminal according to one embodiment of the present disclosure;
FIG. 2 shows a flowchart of a control method for a cleaning robot applied to a cleaning robot according to one embodiment of the present disclosure;
FIG. 3A shows a graphical interface according to one embodiment of the present disclosure;
FIG. 3B shows a schematic diagram of interaction between a graphical interface and a cleaning robot according to one embodiment of the present disclosure;
FIG. 4 shows a schematic diagram of a graphical interface according to one embodiment of the present disclosure;
FIG. 5 shows another schematic diagram of a graphical interface according to one embodiment of the present disclosure;
FIG. 6 shows still another schematic diagram of a graphical interface according to one embodiment of the present disclosure;
FIG. 7 shows a schematic diagram of control logic corresponding to a first function according to one embodiment of the present disclosure;
FIG. 8 shows a schematic diagram of control logic corresponding to a second function according to one embodiment of the present disclosure;
FIG. 9 shows a schematic diagram of control logic corresponding to a third function according to one embodiment of the present disclosure;
FIG. 10 shows a schematic diagram of control logic corresponding to a fourth function according to one embodiment of the present disclosure;
FIG. 11 shows a schematic diagram of a sweeper function server subscribing to an event corresponding to a function service according to one embodiment of the present disclosure;
FIG. 12 shows a structural diagram of a control apparatus for a cleaning robot applied to a configuration terminal according to one embodiment of the present disclosure; and
FIG. 13 shows a structural diagram of a control apparatus for a cleaning robot applied to a cleaning robot according to one embodiment of the present disclosure.

### DETAILED DESCRIPTION

Exemplary embodiments of the present disclosure will be described in more detail below with reference to the drawings. While the exemplary embodiments of the present disclosure are shown in the drawings, it should be understood that the present disclosure may be embodied in various forms and should not be limited to the embodiments set forth herein. Rather, these embodiments are provided such that the present disclosure will be thoroughly understood, and the scope of the present disclosure will be fully conveyed to those skilled in the art.

It should be noted that the terms "first", "second", and the like in the specification, claims, and the above drawings of the present disclosure are defined to distinguish similar objects, and are not necessarily used to describe a specific order or sequence. It should be understood that these terms are interchangeable in proper circumstances, such that the embodiments of the present disclosure described herein can be implemented in an order other than those illustrated or described herein. In addition, the terms "comprise", "include", and their variants are to be interpreted as openended terms meaning "including/comprising, but not limited to".

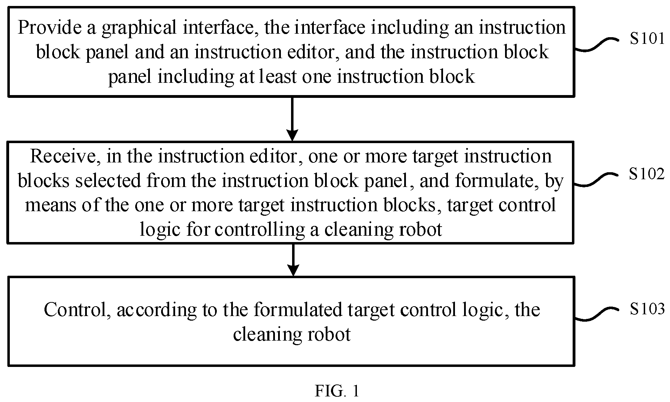

In order to solve the above technical problem, one embodiment of the present disclosure provides a control method for a cleaning robot applied to a configuration terminal. As shown in FIG. 1, the control method for a cleaning robot applied to a configuration terminal may include the following steps S101 to S103.

In step S101, a graphical interface is provided. The interface includes an instruction block panel and an instruction editor. The instruction block panel includes at least one instruction block.

In step S102, one or more target instruction blocks selected from the instruction block panel are received in the instruction editor, and target control logic for controlling the cleaning robot is formulated by means of the one or more target instruction blocks.

In step S103, the cleaning robot is controlled according to the formulated target control logic.

In this step, target control code can be generated according to the formulated target control logic, and the target control code is sent to the cleaning robot, such that the target control code is executed to control the cleaning robot.

In the embodiment, the graphical interface can be provided at the configuration terminal, and the user can formulate target control logic based on his/her own diversified and personalized requirements to achieve corresponding target function requirements, such that the usage scenarios of the cleaning robot are enriched, and the working efficiency of the cleaning robot is improved.

In the embodiment, the function points of the cleaning robot, the configurable parameters and modes of the function points, and the like may be specifically sorted out. These function points, the configurable parameters and modes of the function points, and the like are encapsulated into programming instructions, which are intuitively and clearly integrated into the graphical interface. At least one instruction block is displayed on the instruction block panel of the interface.

In one embodiment of the present disclosure, one possible implementation is provided. The at least one instruction block displayed on the instruction block panel of the interface may specifically include a first-level instruction block, and each first-level instruction block includes a second-level instruction block. For example, the first-level instruction block may be an AI (artificial intelligence, artificial intelligence) instruction block, and the AI instruction block includes a second-level instruction block, such as voice recognition, object recognition, stain recognition, and speech recognition-based wakeup.

Optionally, each second-level instruction block may further include a third-level instruction block, such as a first camera and a second camera. This is not limited in the embodiment.

In addition, each third-level instruction block may further include a fourth-level instruction block, and so on. Specifically, the levels may be set based on the programming instructions encapsulated by the function points, the configurable parameters and modes of the function points, and the like. This is not limited in the embodiment.

In one embodiment of the present disclosure, one possible implementation is provided. The above step S102 of receiving, in the instruction editor, the one or more target instruction blocks selected from the instruction block panel may specifically involve receiving, in the instruction editor, one or more target instruction blocks selected from the first-level instruction block and/or the second-level instruction block of the instruction block panel, which makes the selection more flexible and efficient. Here, the one or more target instruction blocks can be selected from the instruction block panel by clicking, dragging, double-clicking, or the like. This is not limited in the embodiment.

Optionally, if the instruction block panel includes multiple levels of instruction blocks, such as a first-level instruction block, a second-level instruction block, and a third-level instruction block, one or more target instruction blocks can be selected from these multiple levels of instruction blocks, which makes the selection more flexible and efficient.

In one embodiment of the present disclosure, one possible implementation is provided. Each first-level instruction block mentioned in the embodiment may include one or more of an artificial intelligence instruction block, a sweeping instruction block, a determining instruction block, an action instruction block, a function instruction block, a loop and branch instruction block, an event instruction block, and other instruction blocks. This is not limited in the embodiment.

Optionally, if the first-level instruction block includes an artificial intelligence instruction block, at least one second-level instruction block under the first-level instruction block may include one or more of voice recognition, object recognition, stain recognition, and speech recognition-based wakeup. This is not limited in the embodiment.

Optionally, if the first-level instruction block includes a sweeping instruction block, at least one second-level instruction block under the first-level instruction block may include one or more of a sweeping position, a sweeping mode, and a suction force. This is not limited in the embodiment. The sweeping position instruction block here may also include a third-level instruction block, such as a master bedroom, a living room, a secondary bedroom, a balcony, and a bathroom. The sweeping mode instruction block may also include a third-level instruction block, such as sweeping only, mopping only, moving only, and sweeping and mopping. The suction force instruction block may also include a third-level instruction block, such as a strong force and an ordinary force. This is not limited in the embodiment.

Optionally, if the first-level instruction block includes an event instruction block, sensor functions, such as an infrared sensor, a distance sensor, and an acceleration sensor, of the cleaning robot can be defined as event instructions. For example, when a sensor of the cleaning robot detects a collision between the cleaning robot and a wall or a virtual wall, a collision event is generated. In this case, a collision event instruction block can be used as a second-level instruction block under the event instruction block. It should be noted that the examples herein are merely illustrative and are not intended to limit the embodiment.

In one embodiment of the present disclosure, one possible implementation is provided. The above step S102 of formulating, by means of the one or more target instruction blocks, the target control logic for controlling the cleaning robot may specifically include the following steps A1 and A2.

In step A1, description information of a function to be implemented to control the cleaning robot is acquired.

In this step, the description information of the function is a detailed description of the function to be implemented to control the cleaning robot. For example, the description information of the function may be that a sweeper switches to a security protection mode when finding that there is no one at home, and triggers an alarm when detecting an unknown person entering the house. For another example, the description information of the function may be that the sweeper performs sweeping at 8:00 a.m. on workdays, and starts sweeping at 9:00 a.m. on non-workdays. It should be noted that the examples herein are merely illustrative and are not intended to limit the embodiment.

In step A2, based on the description information of the function, the target control logic for controlling the cleaning robot is formulated by means of the one or more target instruction blocks.

In the embodiment, based on the description information of the function, the target control logic for controlling the cleaning robot can be formulated by means of the one or more target instruction blocks, which is more accurate and efficient, such that the usage scenarios of the cleaning robot are enriched, and the working efficiency of the cleaning robot is improved.

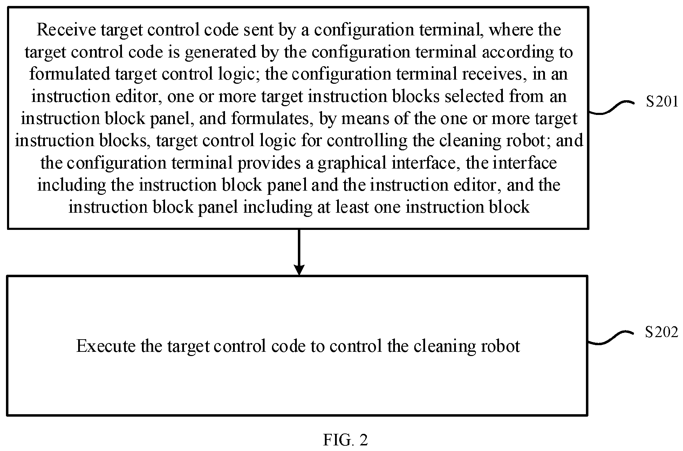

Based on the same inventive concept, one embodiment of the present disclosure further provides a control method for a cleaning robot applied to a cleaning robot. As shown in FIG. 2, the control method for a cleaning robot applied to a cleaning robot may include the following steps S201 and S202.

In step S201, target control code sent by a configuration terminal is received. The target control code is generated by the configuration terminal according to formulated target control logic; the configuration terminal receives, in an instruction editor, one or more target instruction blocks selected from an instruction block panel, and formulates, by means of the one or more target instruction blocks, target control logic for controlling the cleaning robot; and the configuration terminal provides a graphical interface, the interface including the instruction block panel and the instruction editor, and the instruction block panel including at least one instruction block.

In step S202, the target control code is executed to control the cleaning robot.

In the embodiment, the target control code sent by the configuration terminal is received. The target control code here is generated by the configuration terminal according to the formulated target control logic. In this way, a high-level instruction program based on the user intent is converted into a command sequence executable by the cleaning robot, so as to control the cleaning robot, such that the usage scenarios of the cleaning robot are enriched, and the working efficiency of the cleaning robot is improved.

In one embodiment of the present disclosure, one possible implementation is provided. The cleaning robot may include a code snippet manager and a code executor. After step S201 of receiving the target control code sent by the configuration terminal, the code snippet manager may further store the target control code. In this way, step S202 of executing the target control code to control the cleaning robot may specifically include the following steps B1 and B2.

In step B1, the code snippet manager loads the target control code to the code executor.

In step B2, the code executor executes the target control code to control the cleaning robot.

In the embodiment, the code executor executes the target control code to convert the high-level instruction program based on the user intent into the command sequence executable by the cleaning robot, so as to control the cleaning robot, such that the usage scenarios of the cleaning robot are enriched, and the working efficiency of the cleaning robot is improved.

In one embodiment of the present disclosure, one possible implementation is provided. The cleaning robot may further include a function server. In this case, in the above step B2, executing, by the code executor, the target control code to control the cleaning robot may specifically include the following steps B21 and B22.

In step B21, when a function service is involved in a process of executing the target control code, the code executor may customize the function service from the function server, and the function server subscribes to an event corresponding to the function service on an Internet of Things IOT event bus.

In this step, IOT (Internet of Things, Internet of Things) refers to connecting any object to a network through an information sensing device according to an agreed protocol, enabling the object to perform information exchange and communication through an information propagation medium to implement functions such as intelligent recognition, positioning, tracking, and supervision. The IOT event bus manages IOT devices (such as a smart door lock, a smart air conditioner, and a smart light fixture) and monitors events related to the IOT devices.

In step B22, when monitoring the event corresponding to the function service, the code executor executes control code of the event corresponding to the function service to control the cleaning robot.

In the embodiment, through connection to the Internet of Things event system, the code executor performs monitoring in the graphical program of the cleaning robot, triggers a specific device event, and configures, through combination, more complex, flexible, and practical functions, such as triggering a sweeping process after the door is locked by the smart door lock.

In one embodiment of the present disclosure, one possible implementation is provided. In the above step B2, executing, by the code executor, the target control code to control the cleaning robot may specifically include the following step B23.

In step B23, the code executor starts a thread to execute the target control code, and in the process of executing the target control code, checks, based on a specified duration, an execution status of the target control code of one or more of the following:
whether the thread exists;
whether event response control code is abnormal;
whether an execution duration of the target control code exceeds a preset threshold;
whether the cleaning robot reports an error; and
whether a stop command sent by the configuration terminal is received.

The execution of the target control code is stopped in one or more of the following cases: the thread does not exist; the event response control code is abnormal; the execution duration of the target control code exceeds the preset threshold; the cleaning robot reports an error; and the stop command sent by the configuration terminal is received.

In the embodiment, in the process of executing the target control code, the execution status of the target control code is checked based on the specified duration, which can improve the code execution accuracy and efficiency.

In one embodiment of the present disclosure, one possible implementation is provided. In the above step B1, loading, by the code snippet manager, the target control code to the code executor may specifically involve loading, by the code snippet manager, the target control code to the code executor that is sandboxed. In the above step B2, executing, by the code executor, the target control code to control the cleaning robot may specifically involve executing, by the code executor, the target control code in a sandbox to control the cleaning robot.

Due to the target control logic formulated by the user, the target control code generated according to the target control logic may also be referred to as user code, and there may be some problems (such as an endless loop and execution of malicious code). In the embodiment, the user code is deployed in a secure sandbox for execution, such that the user code can only invoke limited functions and modules, and the code executor serves as a monitor. When the user code is executed, the code that is being executed can be actively terminated; and when the code execution times out or an error occurs, the user code is actively terminated, thereby ensuring the safe operation of the cleaning robot.

Various implementations of each link of the embodiments shown in FIGs. 1 and 2 are described above, and the control method for a cleaning robot applied to a configuration terminal and the control method for a cleaning robot applied to a cleaning robot according to the embodiments of the present disclosure will be further described below with reference to specific embodiments.

Due to the limitation of existing interactive elements, it is impossible or difficult for the interaction between the user and the robot to meet some highly flexible configuration requirements. For example, in the daytime (for example, 8:00 a.m. to 6:00 p.m.), after recognizing that there is no one at home, the robot can autonomously complete a deep sweeping function; alternatively, when roaming in a room and recognizing a pet or a specific object, the robot takes a photo and then send the photo to a mailbox of the user or send an APP message to the user account.

Meanwhile, with the increase in intelligent household devices, a linkage mechanism is required between different smart devices. For example, after the smart door lock finds that the user closes the door and leaves the room, the function of the cleaning robot can also be set to a security protection mode.

In order to solve the above problem or a similar complex and flexible user interaction problem, a highly customizable interaction technology is required.

In the related art, hardware functions of a cleaning robot are directly provided through an SDK (software development kit, software development kit), and the hardware functions are invoked through programming statements, thereby controlling various behaviors of the cleaning robot.

However, if the hardware functions of the cleaning robot are directly provided through the SDK, it is difficult for the user to perform customized programming. The main reason lies in the complexity of embedded system programming, which involves related knowledge of hardware, software, control theories, and the like. In addition, each category of knowledge requires a lot of professional training to master. For example, if the user is allowed to directly control the motor of the cleaning robot, it is very likely that the motor of the cleaning robot will be damaged due to an excessive current parameter during the debugging process of the program by the user. In addition, a large amount of programming and debugging work is required from the underlying detailed API (application programming interface, application programming interface) to the completion of specific customization requirements, and it is almost impossible for an ordinary user to complete such code writing work.

The embodiments provide an interaction method for graphical and programmatic operations of a cleaning robot, which can achieve a high degree of customization of functions of the cleaning robot.

In a specific embodiment, the configuration terminal may be a smart phone, a tablet computer, a personal computer, or the like. This is not limited in the embodiment. The cleaning robot may be a sweeping robot, a mopping robot, or the like. This is not limited in the embodiment.

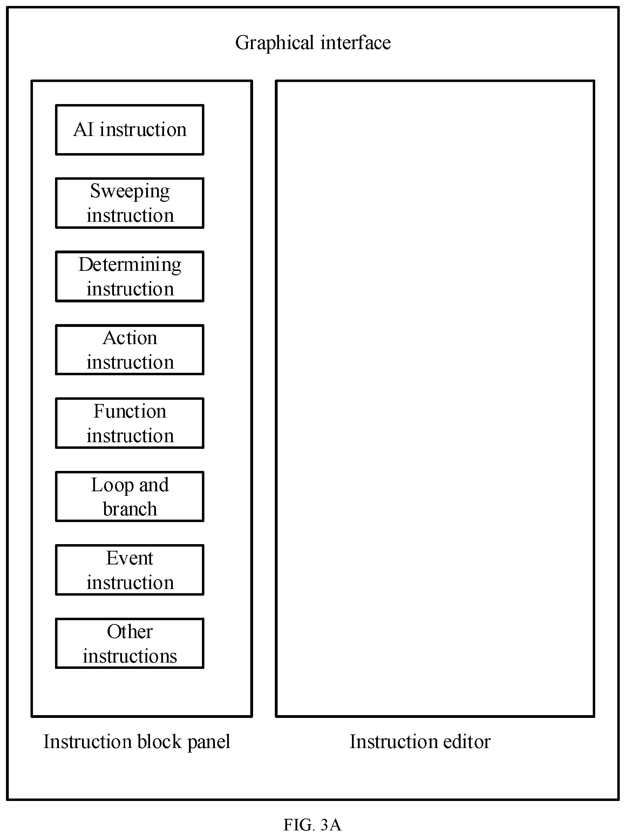

FIG. 3A shows a graphical interface according to one embodiment of the present disclosure. FIG. 3A provides a graphical interface. The interface includes an instruction block panel and an instruction editor. The instruction block panel includes at least one instruction block, such as an AI instruction, a sweeping instruction, a determining instruction, an action instruction, a function instruction, a loop and branch, an event instruction, and other instructions. One or more target instruction blocks selected from the instruction block panel may be received in the instruction editor, and target control logic for controlling the cleaning robot is formulated by the one or more target instruction blocks.

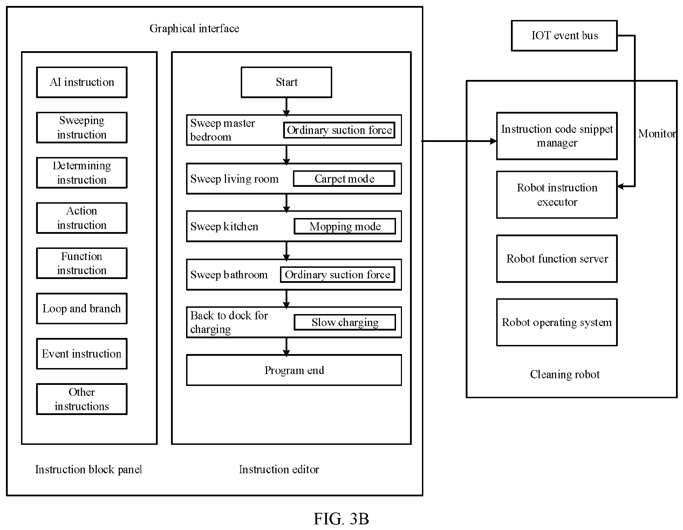

FIG. 3B shows a schematic diagram of interaction between a graphical interface and a cleaning robot according to one embodiment of the present disclosure. In FIG. 3B, the left part is a graphical interface, and an instruction block panel of the interface may provide, for example, an AI instruction, a sweeping instruction, a determining instruction, an action instruction, a function instruction, a loop and branch, an event instruction, and other instructions. On the right of the left part is an instruction editor. In the instruction editor, Start -> Sweep master bedroom (Set ordinary suction force) -> Sweep living room (Set carpet mode) -> Sweep kitchen (Set mopping mode) -> Sweep bathroom (Set ordinary suction force) -> Back to dock for charging (Set slow charging) -> Program end is the target control logic edited by the user, and the target control logic is executed sequentially. Subsequently, target control code is generated according to the formulated target control logic, and the target control code is sent to the cleaning robot.

In FIG. 3B, the right part is the processing logic of the cleaning robot. Specifically, the configuration terminal uploads a code snippet (i.e., the target control code generated by the configuration terminal according to the formulated target control logic) to the cleaning robot; an instruction code snippet manager (i.e., a code snippet manager) of the cleaning robot stores and loads the code snippet of the user to a file system of the cleaning robot; and a robot instruction executor (i.e., a code executor) executes the code snippet, subscribes to a function service event from a robot function server (i.e., a function server), and monitors an IOT event bus. Here, the instruction code snippet manager, the robot instruction executor, and the robot function server are implemented based on a robot operating system.

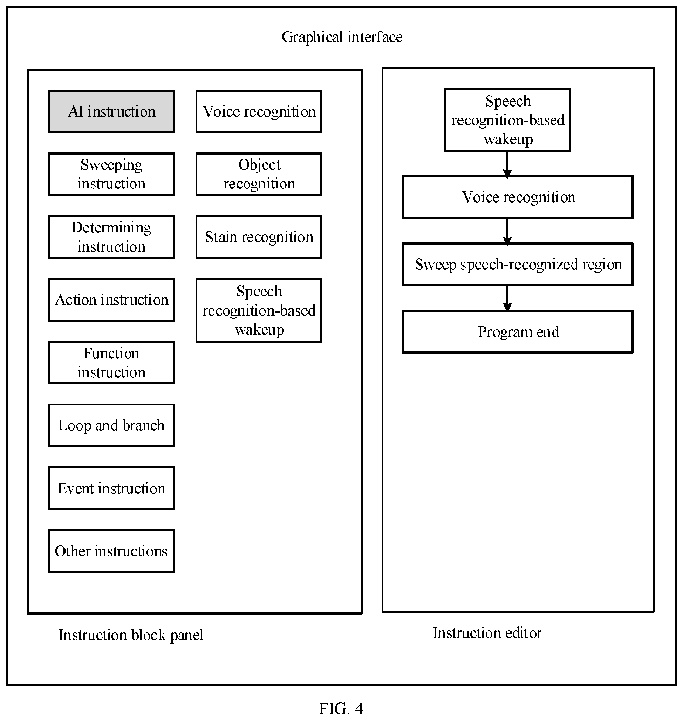

FIG. 4 shows a schematic diagram of a graphical interface according to one embodiment of the present disclosure. In the instruction block panel shown in FIG. 4, the AI instruction is a first-level instruction block, and the first-level instruction block further includes second-level instruction blocks, such as voice recognition, object recognition, stain recognition, and speech recognition-based wakeup. Custom programming can be implemented according to these instruction blocks. For example, in the instruction editor shown in FIG. 4, the control logic edited is: Speech recognition-based wakeup -> Voice recognition -> Sweep speech-recognized region -> Program end.

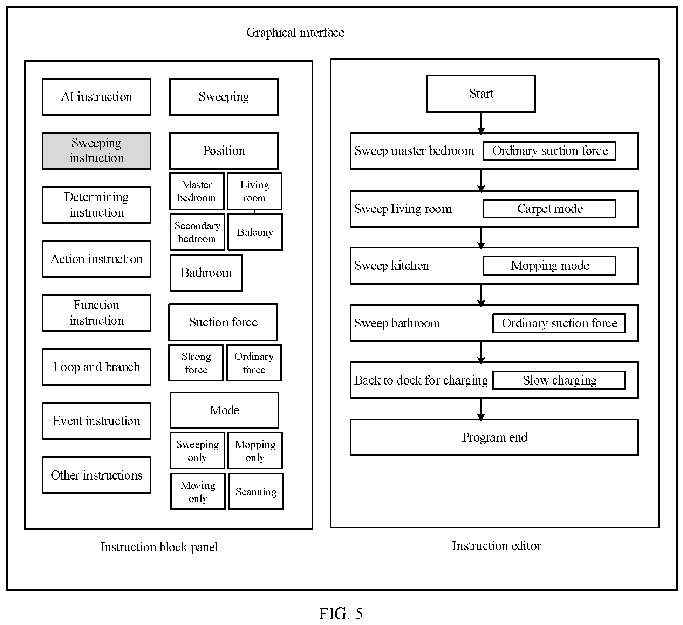

FIG. 5 shows another schematic diagram of a graphical interface according to one embodiment of the present disclosure. In the instruction block panel shown in FIG. 5, the sweeping instruction is a first-level instruction block, and the first-level instruction block further includes second-level instruction blocks, such as a position (such as a master bedroom, a living room, a secondary bedroom, a balcony, and a bathroom), a suction force (such as a strong force and an ordinary force), and a mode (such as sweeping only, mopping only, moving only, and sweeping and mopping). Custom programming can be implemented according to these instruction blocks. For example, in the instruction editor shown in FIG. 5, the control logic edited is: Start -> Sweep master bedroom (ordinary suction force) -> Sweep living room (carpet mode) -> Sweep kitchen (mopping mode) -> Sweep bathroom (ordinary suction force) -> Back to dock for charging (Slow charging) -> Program end.

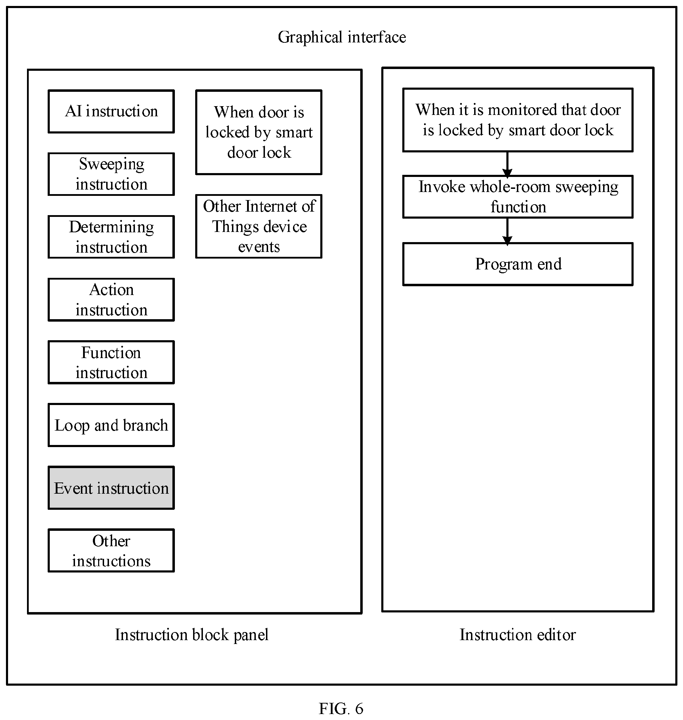

FIG. 6 shows still another schematic diagram of a graphical interface according to one embodiment of the present disclosure. In the instruction block panel shown in FIG. 6, the event instruction is a first-level instruction block, and the first-level instruction block further includes second-level instruction blocks, such as a case where the door is locked by a smart door lock, and other Internet of Things device events. Custom programming can be implemented according to these instruction blocks. For example, in the instruction editor shown in FIG. 6, the control logic edited is: When it is monitored that door is locked by smart door lock -> Invoke whole-room sweeping function -> Program end, thereby achieving linkage with the smart door lock.

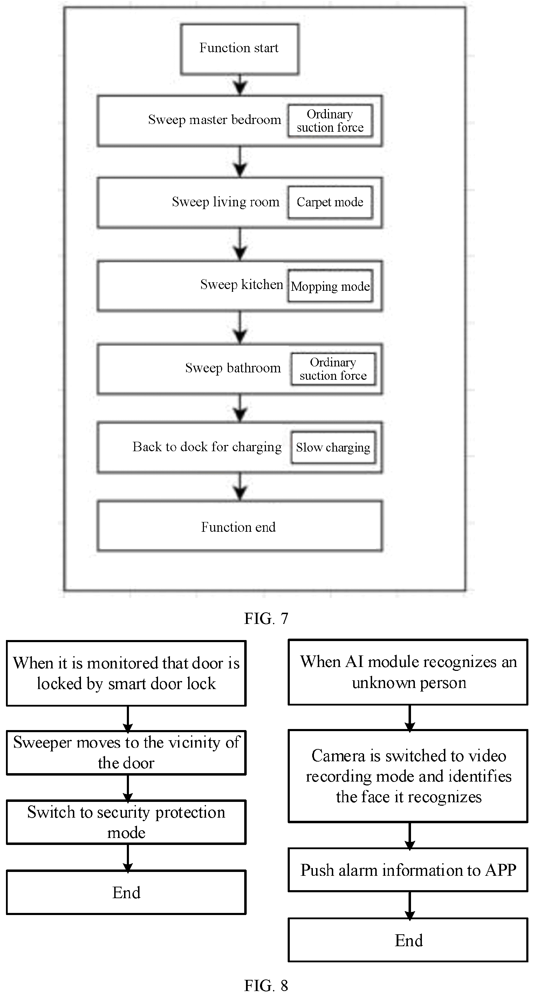

FIG. 7 shows a schematic diagram of control logic corresponding to a first function according to one embodiment of the present disclosure. The whole-room sweeping function combination function shown in FIG. 7 is defined as a reusable function.

FIG. 8 shows a schematic diagram of control logic corresponding to a second function according to one embodiment of the present disclosure. The function is to switch to a security protection mode when the sweeper finds that there is no one at home, and trigger an alarm when the sweeper detects an unknown person entering the house. The control logic edited is: When the door is monitored to be locked by the smart door lock -> Sweeper moves to the vicinity of the door -> Switch to security protection mode. The security protection mode means that when the AI module recognizes an unknown person, the camera is switched to a video recording mode, identifies the face it recognizes, and pushes alarm information to the APP if recognizing an unknown person.

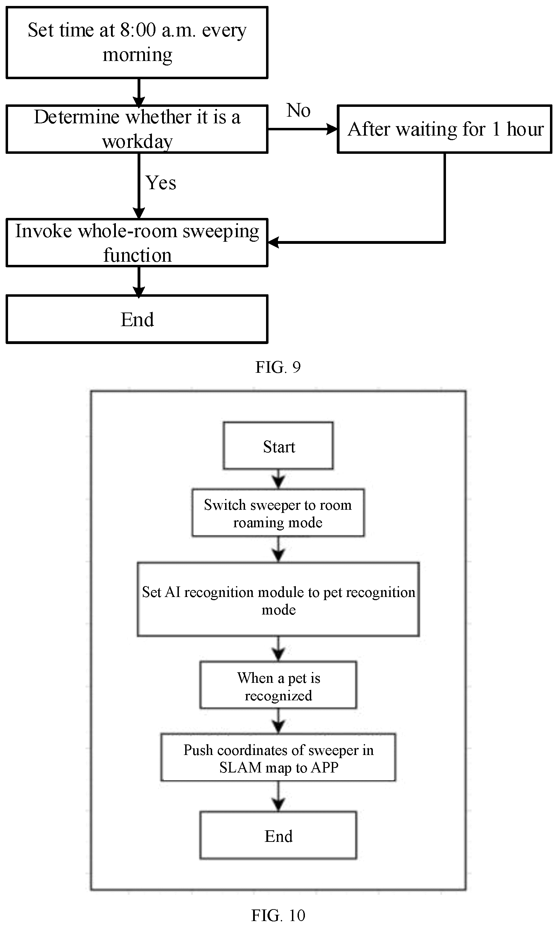

FIG. 9 shows a schematic diagram of control logic corresponding to a third function according to one embodiment of the present disclosure. The function is to perform sweeping at 8:00 a.m. on workdays and to start sweeping at 9:00 a.m. on non-workdays. The control logic edited is: Set time at 8:00 a.m. every morning -> Determine whether it is a workday -> If not, invoke whole-room sweeping function after waiting for 1 hour; and if yes, invoke the whole-room sweeping function.

FIG. 10 shows a schematic diagram of control logic corresponding to a fourth function according to one embodiment of the present disclosure. The function is that when roaming in a room and finding a pet, the sweeping robot pushes a position of the pet to the APP. The control logic edited is: Start -> Switch sweeper to room roaming mode -> Set AI recognition module to pet recognition mode -> When pet is recognized -> Push coordinates of sweeper in SLAM (simultaneous localization and mapping, simultaneous localization and mapping) map to APP -> End.

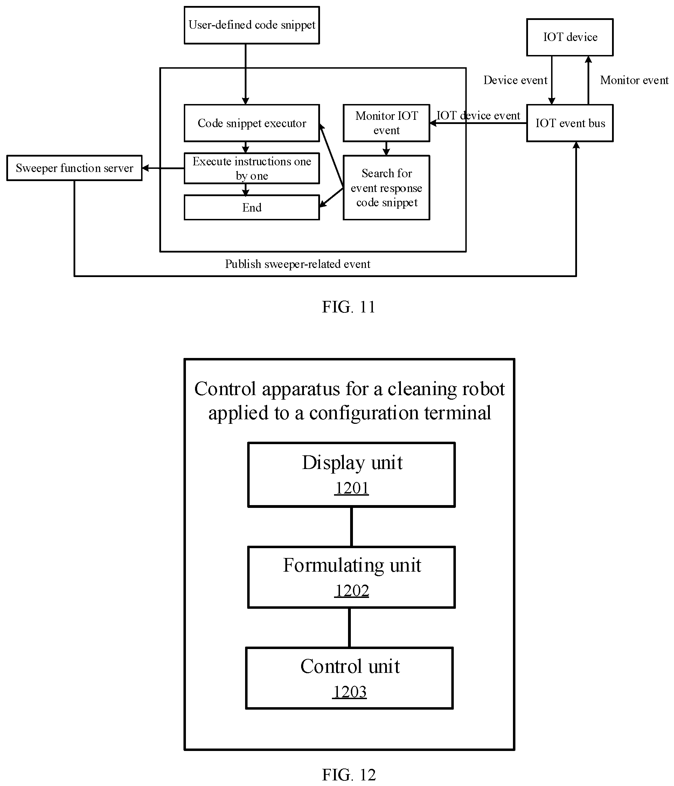

FIG. 11 shows a schematic diagram of a sweeper function server subscribing to an event corresponding to a function service according to one embodiment of the present disclosure. In FIG. 11, the cleaning robot is a sweeper, and a user-defined code snippet of the configuration terminal is uploaded to a code snippet executor (i.e., a code executor). The code snippet executor executes instructions one by one, and when a function service is involved, the code snippet executor customizes the function service from the sweeper function server, and the function server subscribes to an event corresponding to the function service from an IOT event bus. That is, a sweeper-related event is published. The IOT event bus monitors a device event of an IOT device, and sends the IOT device event to "Monitor IOT event" of the code snippet executor, and to "Search for event response code snippet". The code snippet executor searches for a corresponding code snippet and continues the execution, and controls the sweeper.

A main function of the code snippet manager is to store and load user code snippets to a file system of the sweeper.

Based on the code generation capability of Blockly (a graphical programming framework), the following Python (a programming language) code snippets are generated according to the user code snippets. The function details of the sweeper have been encapsulated into invokable Python functions.

The code executor is a fixed piece of Python code. The code executor loads the Python code snippets, and then starts a dedicated thread to execute the main function in the code module. Then, the code executor checks the execution status of the user code every tens of milliseconds:
1) whether the user code thread exists;
2) whether the event response Python code is abnormal;
3) whether execution of the user code exceeds a preset threshold;
4) whether the sweeper function module reports an error; and
5) whether a stop command sent by the APP is received.

When any error occurs, the execution of the user program is stopped, and the sweeper is switched to a state where the user can interact; that is, the user can interact with the configuration terminal and adjust the target instruction block through the graphical interface of the configuration terminal.

The embodiment can be used to enhance the customizability of the sweeping robot. The user can formulate a more convenient, efficient, and intelligent usage mode for the cleaning robot based on his/her own needs.

It should be noted that sequence numbers of the steps in the above embodiments do not mean execution sequences. The execution sequences of the processes should be determined based on functions and internal logic of the processes, and should not be construed as any limitation on the implementation processes of the embodiments of the present disclosure above. In practical applications, all the possible implementations above may be combined in any manner to form possible embodiments of the present disclosure, and details are not described herein again.

Based on the control method for a cleaning robot provided in the above embodiments, and based on the same inventive concept, one embodiment of the present disclosure further provides a control apparatus for a cleaning robot.

FIG. 12 is a structural diagram of a control apparatus for a cleaning robot applied to a configuration terminal according to one embodiment of the present disclosure. As shown in FIG. 12, the control apparatus for a cleaning robot applied to a configuration terminal may specifically include a display unit 1201, a formulating unit 1202, and a control unit 1203.

The display unit 1201 is configured to provide a graphical interface, the interface includes an instruction block panel and an instruction editor, and the instruction block panel includes at least one instruction block.

The formulating unit 1202 is configured to receive, in the instruction editor, one or more target instruction blocks selected from the instruction block panel, and formulate, by means of the one or more target instruction blocks, target control logic for controlling the cleaning robot.

The control unit 1203 is configured to control the cleaning robot according to the formulated target control logic.

In one embodiment of the present disclosure, one possible implementation is provided. The control unit 1203 is further configured to:
generate target control code according to the formulated target control logic, and send the target control code to the cleaning robot, such that the target control code is executed to control the cleaning robot.

In one embodiment of the present disclosure, one possible implementation is provided. The instruction block includes at least one first-level instruction block.

In one embodiment of the present disclosure, one possible implementation is provided. The first-level instruction block includes at least one second-level instruction block.

In one embodiment of the present disclosure, one possible implementation is provided. The formulating unit 1202 is further configured to:
receive, in the instruction editor, one or more target instruction blocks selected from the first-level instruction block and/or the second-level instruction block of the instruction block panel.

In one embodiment of the present disclosure, one possible implementation is provided. The at least one first-level instruction block includes one or more of an artificial intelligence instruction block, a sweeping instruction block, a determining instruction block, an action instruction block, a function instruction block, a loop and branch instruction block, an event instruction block, and other instruction blocks.

In one embodiment of the present disclosure, one possible implementation is provided. If the first-level instruction block includes an artificial intelligence instruction block, at least one second-level instruction block under the first-level instruction block includes one or more of voice recognition, object recognition, stain recognition, and speech recognition-based wakeup.

In one embodiment of the present disclosure, one possible implementation is provided. If the first-level instruction block includes a sweeping instruction block, at least one second-level instruction block under the first-level instruction block includes one or more of a sweeping position, a sweeping mode, and a suction force.

In one embodiment of the present disclosure, one possible implementation is provided. The formulating unit 1202 is further configured to:
acquiring description information of a function to be implemented to control the cleaning robot; and
based on the description information of the function, formulating, by means of the one or more target instruction blocks, the target control logic for controlling the cleaning robot.

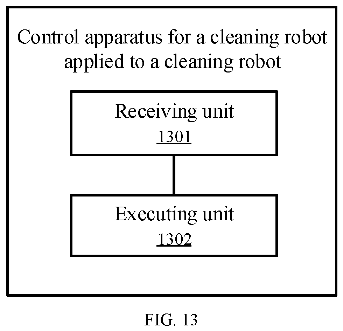

FIG. 13 is a structural diagram of a control apparatus for a cleaning robot applied to a cleaning robot according to one embodiment of the present disclosure. As shown in FIG. 13, the control apparatus for a cleaning robot applied to a cleaning robot may specifically include a receiving unit 1301 and an executing unit 1302.

The receiving unit 1301 is configured to receive target control code sent by a configuration terminal. The target control code is generated by the configuration terminal according to formulated target control logic; the configuration terminal receives, in an instruction editor, one or more target instruction blocks selected from an instruction block panel, and formulates, by means of the one or more target instruction blocks, target control logic for controlling the cleaning robot; the configuration terminal provides a graphical interface, the interface including the instruction block panel and the instruction editor, and the instruction block panel including at least one instruction block.

The executing unit 1302 is configured to execute the target control code to control the cleaning robot.

In one embodiment of the present disclosure, one possible implementation is provided. The executing unit 1302 of the cleaning robot may include a code snippet manager and a code executor.

The code snippet manager stores the target control code.

The code snippet manager loads the target control code to the code executor.

The code executor executes the target control code to control the cleaning robot.

In one embodiment of the present disclosure, one possible implementation is provided. The executing unit 1302 of the cleaning robot further includes a function server.

When a function service is involved in a process of executing the target control code, the code executor customizes the function service from the function server, and the function server subscribes to an event corresponding to the function service on an Internet of Things IOT event bus.

When the event corresponding to the function service is monitored, the code executor executes control code of the event corresponding to the function service to control the cleaning robot.

In one embodiment of the present disclosure, one possible implementation is provided. The code executor starts a thread to execute the target control code, and in the process of executing the target control code, checks, based on a specified duration, an execution status of the target control code of one or more of the following:
whether the thread exists;
whether event response control code is abnormal;
whether an execution duration of the target control code exceeds a preset threshold;
whether the cleaning robot reports an error; and
whether a stop command sent by the configuration terminal is received.

The execution of the target control code is stopped in one or more of the following cases: the thread does not exist; the event response control code is abnormal; the execution duration of the target control code exceeds the preset threshold; the cleaning robot reports an error; and the stop command sent by the configuration terminal is received.

In one embodiment of the present disclosure, one possible implementation is provided. The code snippet manager loads the target control code to the code executor that is sandboxed.

The code executor executes the target control code to control the cleaning robot, including that:
the code executor executes the target control code in a sandbox to control the cleaning robot.

Based on the same inventive concept, one embodiment of the present disclosure further provides a configuration terminal. The configuration terminal includes a processor and a memory. The memory stores a computer program, and the processor is configured to run the computer program to perform the control method for a cleaning robot applied to a configuration terminal according to any one of the above embodiments.

Based on the same inventive concept, one embodiment of the present disclosure further provides a storage medium. The storage medium stores a computer program. The computer program is configured to perform the control method for a cleaning robot applied to a configuration terminal according to any one of the above embodiments while running.

Based on the same inventive concept, one embodiment of the present disclosure further provides a cleaning robot. The cleaning robot includes a processor and a memory. The memory stores a computer program, and the processor is configured to run the computer program to perform the control method for a cleaning robot applied to a cleaning robot according to any one of the above embodiments.

Based on the same inventive concept, one embodiment of the present disclosure further provides a storage medium. The storage medium stores a computer program. The computer program is configured to perform the control method for a cleaning robot applied to a cleaning robot according to any one of the above embodiments while running.

It can be clearly understood by those skilled in the art that, for detailed working processes of the system, apparatus, and module described above, reference may be made to the corresponding processes in the foregoing method embodiments. For brevity, details are not described herein again.

It can be understood by those of ordinary skill in the art that the technical solutions of the present disclosure may essentially be embodied, or all or some of the technical solutions may be embodied, in the form of a software product. The computer software product is stored in a storage medium and includes several program instructions to enable an electronic device (such as a personal computer, a server, or a network device) to perform all or some of the steps of the methods described in the embodiments of the present disclosure when the program instructions are running. The foregoing storage medium includes: any medium that can store program code, such as a USB flash drive, a removable hard disk, a read-only memory (ROM), a random access memory (RAM), a magnetic disk, or an optical disc.

Alternatively, all or some of the steps for implementing the foregoing method embodiments may be completed by hardware (electronic devices such as a personal computer, a server, or a network device) related to program instructions. The program instructions may be stored in a computer-readable storage medium. When the program instructions are executed by a processor of an electronic device, the electronic device executes all or some of the steps of the methods described in the embodiments of the present disclosure.

The above embodiments are only used to illustrate the technical solutions of the present disclosure, but not to limit them. Although the present disclosure has been described in detail with reference to the foregoing embodiments, those of ordinary skill in the art should understand that they can still make modifications to the technical solutions described in the foregoing embodiments or make equivalent substitutions for some or all technical features thereof within the spirit and principle of the present disclosure; and these modifications or substitutions do not make the corresponding technical solutions deviate from the protection scope of the present disclosure.

## Claims

1. A control method for a cleaning robot, applied to a configuration terminal, wherein the method comprises:
providing a graphical interface, the interface comprising an instruction block panel and an instruction editor, and the instruction block panel comprising at least one instruction block;
receiving, in the instruction editor, one or more target instruction blocks selected from the instruction block panel, and formulating, by means of the one or more target instruction blocks, target control logic for controlling the cleaning robot; and
controlling, according to the formulated target control logic, the cleaning robot.

2. The method according to claim 1, wherein the instruction block comprises at least one first-level instruction block.

3. The method according to claim 2, wherein the first-level instruction block comprises at least one second-level instruction block.

4. The method according to claim 2 or 3, wherein receiving, in the instruction editor, the one or more target instruction blocks selected from the instruction block panel comprises:
receiving, in the instruction editor, one or more target instruction blocks selected from the first-level instruction block and/or a second-level instruction block of the instruction block panel.

5. The method according to any one of claims 2 to 4, wherein at least one first-level instruction block comprises one or more of an artificial intelligence instruction block, a sweeping instruction block, a determining instruction block, an action instruction block, a function instruction block, a loop and branch instruction block, an event instruction block, and other instruction blocks.

6. The method according to claim 5, wherein if the first-level instruction block comprises an artificial intelligence instruction block, at least one second-level instruction block under the first-level instruction block comprises one or more of voice recognition, object recognition, stain recognition, and speech recognition-based wakeup.

7. The method according to claim 5, wherein if the first-level instruction block comprises a sweeping instruction block, at least one second-level instruction block under the first-level instruction block comprises one or more of a sweeping position, a sweeping mode, and a suction force.

8. The method according to any one of claims 1 to 7, wherein formulating, by means of the one or more target instruction blocks, the target control logic for controlling the cleaning robot comprises:
acquiring description information of a function to be implemented to control the cleaning robot; and
based on the description information of the function, formulating, by means of the one or more target instruction blocks, the target control logic for controlling the cleaning robot.

9. A control method for a cleaning robot, applied to a cleaning robot, wherein the method comprises:
receiving target control code sent by a configuration terminal, wherein the target control code is generated by the configuration terminal according to formulated target control logic; the configuration terminal receives, in an instruction editor, one or more target instruction blocks selected from an instruction block panel, and formulates, by means of the one or more target instruction blocks, target control logic for controlling the cleaning robot; the configuration terminal provides a graphical interface, the interface comprising the instruction block panel and the instruction editor, and the instruction block panel comprising at least one instruction block; and
executing the target control code to control the cleaning robot.

10. The method according to claim 9, wherein the cleaning robot comprises a code snippet manager and a code executor;
after receiving the target control code sent by the configuration terminal, the method further comprises:
storing, by the code snippet manager, the target control code; and
executing the target control code to control the cleaning robot, comprising:
loading, by the code snippet manager, the target control code to the code executor; and
executing, by the code executor, the target control code to control the cleaning robot.

11. The method according to claim 10, wherein the cleaning robot further comprises a function server;
executing, by the code executor, the target control code to control the cleaning robot comprises:
when a function service is involved in a process of executing the target control code, customizing, by the code executor, the function service from the function server, and subscribing, by the function server, to an event corresponding to the function service on an Internet of Things IOT event bus; and
when the event corresponding to the function service is monitored, executing, by the code executor, control code of the event corresponding to the function service to control the cleaning robot.

12. The method according to claim 11, wherein executing, by the code executor, the target control code to control the cleaning robot comprises:
starting, by the code executor, a thread to execute the target control code, and in the process of executing the target control code, checking, based on a specified duration, an execution status of the target control code of one or more of the following:
whether the thread exists;
whether event response control code is abnormal;
whether an execution duration of the target control code exceeds a preset threshold;
whether the cleaning robot reports an error; and
whether a stop command sent by the configuration terminal is received; and
stopping executing the target control code in one or more of the following cases: the thread does not exist; the event response control code is abnormal; the execution duration of the target control code exceeds the preset threshold; the cleaning robot reports an error; and the stop command sent by the configuration terminal is received.

13. The method according to claim 10, wherein loading, by the code snippet manager, the target control code to the code executor comprises:
loading, by the code snippet manager, the target control code to the code executor that is sandboxed; and
executing, by the code executor, the target control code to control the cleaning robot comprises:
executing, by the code executor, the target control code in a sandbox to control the cleaning robot.

14. A control apparatus for a cleaning robot, applied to a configuration terminal, wherein the apparatus comprises:
a display unit, configured to provide a graphical interface, the interface comprising an instruction block panel and an instruction editor, and the instruction block panel comprising at least one instruction block;
a formulating unit, configured to receive, in the instruction editor, one or more target instruction blocks selected from the instruction block panel, and formulate, by means of the one or more target instruction blocks, target control logic for controlling the cleaning robot; and
a control unit, configured to control the cleaning robot according to the formulated target control logic.

15. A control apparatus for a cleaning robot, applied to a cleaning robot, wherein the apparatus comprises:
a receiving unit, configured to receive target control code sent by a configuration terminal, wherein the target control code is generated by the configuration terminal according to formulated target control logic; the configuration terminal receives, in an instruction editor, one or more target instruction blocks selected from an instruction block panel, and formulates, by means of the one or more target instruction blocks, target control logic for controlling the cleaning robot; the configuration terminal provides a graphical interface, the interface comprising the instruction block panel and the instruction editor, and the instruction block panel comprising at least one instruction block; and
an executing unit, configured to execute the target control code to control the cleaning robot.

16. A configuration terminal, wherein the configuration terminal comprises a processor and a memory, wherein the memory stores a computer program, and the processor is configured to run the computer program to perform the control method for a cleaning robot according to any one of claims 1 to 8.

17. A storage medium, wherein the storage medium stores a computer program, and the computer program is configured to perform the control method for a cleaning robot according to any one of claims 1 to 13 while running.

18. A cleaning robot, comprising a processor and a memory, wherein the memory stores a computer program, and the processor is configured to run the computer program to perform the control method for a cleaning robot according to any one of claims 9 to 13.
